# EUROPEAN PATENT APPLICATION

(11) **EP 2 264 241 A1**
(43) Date of publication of application: **22.12.2010**
(21) Application number: 09718120.0
(22) Date of filing: 27.02.2009
(51) Int. Cl.: D06M 23/00, B60C 9/00, D02G 3/36, D02G 3/48, D06M 10/00, D06M 15/41, D06M 15/55, D06M 15/693

(54) **METHOD FOR MODIFYING ORGANIC FIBER CORD**

(30) Priority: 03.03.2008 JP 2008051624; 27.02.2009 JP 2009045172
(71) Applicant: Bridgestone Corporation, Tokyo 104-8340 (JP)
(72) Inventor: MORI, Hiroyuki, Kodaira-shi Tokyo 187-0031 (JP); FUJIWARA, Masaoki, Kodaira-shi Tokyo 187-0031 (JP)
(74) Representative: Lamb, Martin John Carstairs
(86) International application number: PCT/JP2009/053711
(87) International publication number: WO 2009/110386

(57) **Abstract**

Provided is a method for modifying an organic fiber cord, in which method an organic fiber cord can be stably modified at a high-quality, and at the same time, a higher efficiency can be attained compared to conventional methods.

The method for modifying an organic fiber cord comprises the steps of dipping an organic fiber cord for tire reinforcement in an adhesive, the organic fiber cord comprising twisted organic fibers; drying the thus dipped organic fiber cord; and heat-treating the thus dried organic fiber cord for modification. In the drying step, the dipped organic fiber cord is consecutively irradiated with a microwave and a far-infrared radiation.

## Description

### TECHNICAL FIELD

The present invention relates to a method for modifying an organic fiber cord (hereinafter, also simply referred to as "modification method"). Particularly, the present invention relates to a method for modifying an organic fiber cord which relating to an improvement of a drying step of a dipped organic fiber cord.

### BACKGROUND ART

Conventionally, an organic fiber cord is modified by dipping it in an adhesive solution such as resorcin-formalin/rubber latex (RFL) solution and subsequently subjecting the thus dipped organic fiber cord to a drying and heat treatment using a hot air as a heating medium, so that desired physical properties and adhesion with a rubber are imparted to the organic fiber cord to be used in a tire.

Further, there have been also proposed a technique of efficiently drying an adhesive-dipped cord in a short period of time by utilizing a microwave in the aforementioned drying step (Patent Document 1) and a technique in which a far-infrared radiation is utilized in the aforementioned drying step (Patent Document 2).

Patent Document 1: Japanese Unexamined Patent Application Publication NO.2006-307365 (Claims and the like)

Patent Document 2: Japanese Unexamined Patent Application Publication NO.2007-186825 (Claims and the like)

### DISCLOSURE OF THE INVENTION

### PROBLEMS TO BE SOLVED BY THE INVENTION

Conventionally, in cases where only a hot air is used as the heating medium in the aforementioned step of modifying an organic fiber cord, since the air has a low thermal conductivity, it is required to further improve the drying efficiency. In addition, when the length of the carrying distance of the organic fiber cord in the drying oven is increased in order to improve the productivity, the resulting enlargement of the modification apparatus causes a problem that the space and the cost are increased.

Meanwhile, in cases where only a microwave is used in the drying step, since the drying treatment time (microwave irradiation time) is extremely short at not longer than 10 seconds, the treatment can be performed very efficiently. However, on the other hand, since a slight variation in the irradiation time causes a large shift in the moisture content of the organic fiber cord, it may become difficult to stably perform a high-quality modification. In addition, the cord itself may become abnormally heated by the high-energy microwave to be melted.

Further, in cases where a far-infrared radiation is used, the moisture content of the organic fiber cord after the drying step can be easily adjusted to an optimal value; therefore, the organic fiber cord can be stably modified at a high-quality. In this case, a greater treatment capacity can be attained compared to the cases where a hot air is used; however, the treatment capacity is still not sufficient; therefore, a technique in which an increase in the treatment speed can be attained by a more drastic increase in the efficiency has been desired.

In view of the above, an object of the present invention is to provide a method for modifying an organic fiber cord, in which method an organic fiber cord can be stably modified at a high quality, and at the same time, a higher efficiency can be attained compared to conventional methods.

### MEANS FOR SOLVING THE PROBLEMS

In order to solve the aforementioned problems, the present inventors intensively studied to discover that the aforementioned problems can be solved by consecutively performing a microwave irradiation and far-infrared irradiation on the organic fiber cord in the drying step after the dipping treatment, thereby completing the present invention.

That is, the method for modifying an organic fiber cord according to the present invention is a method comprising the steps of:
dipping an organic fiber cord for tire reinforcement in an adhesive, the organic fiber cord comprising twisted organic fibers;
drying the thus dipped organic fiber cord; and
heat-treating the thus dried organic fiber cord for modification,
wherein, in the drying step, the thus dipped organic fiber cord is consecutively irradiated with a microwave and a far-infrared radiation.

In the present invention, it is preferred that the aforementioned microwave irradiation time be 1.5 to 3.5 seconds and that the aforementioned far-infrared irradiation time be 6 to 15 seconds.

Further, in the present invention, it is preferred that the irradiation power of the aforementioned microwave be 1.5 to 7.5 kW/m and that of the aforementioned far-infrared radiation be 16 to 48 kW/m.

In the present invention, it is preferred that the moisture content of the aforementioned organic fiber cord be 0.1 to 4.0% and that, as the aforementioned organic fiber cord, 1 to 250 of single cords without a weft be simultaneously modified.

### EFFECTS OF THE INVENTION

By having the aforementioned constitution, the present invention can realize a method for modifying an organic fiber cord, in which method an organic fiber cord can be stably modified at a high quality, and at the same time, a higher efficiency can be attained compared to conventional methods.

### BEST MODE FOR CARRYING OUT THE INVENTION

Preferred modes of the present invention will be described in detail.

The present invention is a method for modifying an organic fiber cord for tire reinforcement, the organic fiber cord comprising twisted organic fibers, which method comprises the steps of dipping the organic fiber cord in an adhesive; drying the thus dipped organic fiber cord; and heat-treating the thus dried organic fiber cord for modification.

In the present invention, the thus dipped organic fiber cord is consecutively irradiated with a microwave and a far-infrared radiation in the aforementioned drying step. By consecutively irradiating the organic fiber cord with a far-infrared radiation after the microwave irradiation, a stable and high-quality modification can be performed and a higher efficiency thereof can be achieved compared to conventional methods.

The conditions of the microwave irradiation are not particularly restricted as long as the moisture can be evaporated from the dipped organic fiber cord to a certain degree, and the conditions may be set as desired. For example, the microwave power may be appropriately selected in accordance with the amount of moisture to be dry-treated per unit time. Further, in the drying, in order to improve the drying efficiency, it is preferred that the steam generated in association with the evaporation be discharged to the outside of the apparatus by using a hot-air or warm-air generator in combination so that the steam does not supersaturate inside the drying oven.

As the condition of such microwave irradiation, it is preferred that the microwave irradiation be performed for an irradiation time appropriate for obtaining a desired effect of the present invention. For example, it is preferred that the microwave irradiation time be 1.5 to 3.5 seconds and that the microwave irradiation power be 1.5 to 7.5 kW/m. An excessive amount of the microwave irradiation may rapidly increase the cord temperature to cause a cord breaking due to melting of the cord, while a desired effect may not be attained when the amount of the microwave irradiation is too small; therefore, such these amounts are not preferred.

Further, the conditions of the far-infrared irradiation are also not particularly restricted as long as the moisture can be sufficiently evaporated from the thus microwave-irradiated organic fiber cord, and the conditions may be set as desired. For example, the far-infrared radiation power may be appropriately selected in accordance with the amount of moisture to be dry-treated per unit time. Further, in the drying, it is preferred that inside the heat-treatment oven be heated to a prescribed temperature and the air be circulated by using a fan in combination to uniformize the temperature distribution, thereby improving the thermal efficiency. Furthermore, it is also suitable to force a hot air to circulate within the heat-treatment oven to control the far-infrared radiation power by the thus attained oven temperature.

As the condition of such far-infrared irradiation, it is preferred that the far-infrared irradiation be performed for an irradiation time appropriate for obtaining a desired effect of the present invention. For example, it is preferred that the far-infrared irradiation time be 6 to 15 seconds and that the far-infrared irradiation power be 16 to 48 kW/m. An excessive amount of the far-infrared irradiation prevents the adhesive layer of the cord surface from being formed uniformly, thereby possibly causing a large amount of dip residues to be generated by rapid drying, while a desired effect may not be attained when the amount of the far-infrared irradiation is too small; therefore, such these amounts are not preferred.

As for the combination of the conditions of the microwave irradiation and the far-infrared irradiation, specifically, for example, the microwave irradiation can be performed at an irradiation power of 4.5 kW/m for 1.5 to 3.5 seconds and the far-infrared irradiation can be subsequently performed at an irradiation power of 48 kW/m for 6 to 15 seconds. An insufficient microwave irradiation in the drying step causes a contamination within the oven and a decrease in the adhesion strength due to insufficient drying, while an insufficient far-infrared irradiation increases the moisture content, which are both not preferred. By utilizing the microwave irradiation and the far-infrared irradiation in a balanced manner, the expected effects of the present invention can be attained.

In the modification method according to the present invention, the step of drying the dipped organic fiber cord can be performed in such a manner that the aforementioned conditions are satisfied, so that the expected effects can be attained. Each of the steps other than the drying step can be appropriately carried out in accordance with a conventional method.

For example, in the dipping step, it is preferred to vacuum the adhesive adhered to the organic fiber cord by the dipping in order to adjust the amount of the adhered adhesive to a certain amount. Specifically, the dipping equipment is installed with a vacuum unit which vacuums the surface of the dipped organic fiber cord to remove the excess adhesive, thereby controlling the amount of the adhered adhesive. Whereby the adhesive is adhered to the organic fiber cord in the dipping step always at a certain amount, so that a localized drying failure in the subsequent drying step, a cord breaking due to melting of the cord by heat-drying, an occurrence of treatment inconsistency in the heat-treatment step and the like may be prevented. Particularly, in cases where a single cord(s) is/are subjected to a dipping treatment, since the amount of the adhered adhesive tends to be excessive, it is more effective to control it by using a vacuum unit.

In the present invention, it is also preferred that the moisture content of the dried organic fiber cord be measured after the drying step and that the moisture content be controlled by allowing the microwave power and the far-infrared radiation power to be automatically altered, whereby an occurrence of drying failure can be more effectively prevented. In such a case, the moisture content can be measured by arranging a commercially available non-contact-type moisture content measuring device (for example, the process moisture meter, ST-2200A; manufactured by Advanced Technology, Inc.) at the outlet of the apparatus used in the drying.

It is preferred that the modification according to the present invention be carried out in such a manner that the moisture content of the organic fiber cord does not become less than 0. 1%, that is, while maintaining the moisture content of the organic fiber cord at not less than 0.1%. When the organic fiber cord is in an absolute dry condition, the cord itself absorbs the microwave and the cord temperature is increased, thereby possibly causing a cord breaking due to melting of the cord.

Further, it is preferred that the modification according to the present invention be carried out in such a manner that the moisture content of the organic fiber cord does not exceed 4.0%, that is, while maintaining the moisture content of the organic fiber cord at not higher than 4.0%. A moisture content higher than 4.0% is not preferred since it leads the cord to enter the heat-treatment step without being sufficiently dried, thereby possibly causing a contamination within the heat-treatment oven and making the modification of the adhesion on the cord surface insufficient.

The modification method according to the present invention is particularly effective when the modification is performed on an organic fiber cord comprising a single cord (s) without a weft than on a cloth in the form of a screen. According to the present invention, for example, approximately 1 to 250 single cords can be simultaneously modified.

In the present invention, the organic fiber cord to be treated is not particularly restricted and various organic fiber cords are applicable. Examples of the usable fiber material thereof include all of the twisted cords which can be utilized for tire reinforcement, for instance, polyamides such as nylon and aramid; polyesters such as polyethylene naphthalate (PEN) and polyethylene terephthalate (PET); rayons; polyketones; and vinylons.

### EXAMPLES

The present invention will be described in more detail by way of examples.

In a modification-treatment equipment which comprises a dipping bath for dipping an organic fiber cord into an adhesive; drying ovens A and B for drying the thus dipped organic fiber cord; and heat-treatment ovens A and B for modifying the thus dried organic fiber cord, a modification treatment was performed on organic fiber cords by applying each of the treatment conditions shown in the Tables 1 and 2 below. Used as the organic fiber cord was one having: the material = polyethylene terephthalate; the initial fiber fineness = 1670 dtex; the number of twisted fibers = 2; and the second twist × the first twist = 39 times / 10 cm × 39 times / 10 cm. In order to obtain clear results, the organic fiber cords were subjected to a modification treatment using an epoxy compound in advance before carrying out the present tests. Used as the adhesive was an RFL solution conventionally used in the cords for tire reinforcement.

In the drying oven A, the organic fiber cords were dried by microwave irradiation with the applied temperature and tensile force set at 160°C × 0.227 g/dtex. Used as the microwave generating device was TMG-490C manufactured by SHIBAURA MECHATRONICS CORPORATION (water cooling type; wavelength of 2,450 MHz; irradiation power of 1.5 to 7.5 kW/m). In the drying oven B, the organic fiber cords were further dried by far-infrared irradiation with the applied temperature and tensile force set at 160°C × 0.227 g/dtex. Used as the far-infrared heater was one having an irradiation power of 16 to 48kW/m.

In addition, in the heat-treatment ovens A and B, the temperature and tensile force applied to the organic fiber cords were set at 240°C × 0.227 g/dtex.

For each of the organic fiber cords modified in accordance with the conditions prescribed for each of Examples and Comparative Examples, the total treatment time, the easiness of fiber breaking in the drying step, the moisture content, the breaking strength, the elongation at 2.02 g/dtex (66N) (intermediate elongation), the heat shrinkage rate and the adhesion strength were measured as described in the following. The results thereof are shown in Tables 1 and 2 below.

### <Total treatment time>

The total treatment time is the sum of the treatment time required for the drying step and the heat-treatment step which is expressed as an index, taking the value measured in Comparative Example 2 as 100. A smaller value indicates a higher treatment efficiency.

### <Easiness of fiber breaking in the drying step>

The easiness of fiber breaking in the drying step was evaluated based on the sum of the number of fiber breakings occurred during the dipping treatment and the number of fibers found to be almost broken after the dipping treatment, which sum is expressed as an index, taking the total number of the single cords treated at a time as 100. A smaller value means a better result.

### <Moisture content>

Approximately 3 g of the dry-treated organic fiber cord was taken as a test sample. For this test sample, the moisture content was measured by using an electronic moisture meter manufactured by Shimadzu Corporation with the temperature set at 300°C.

### <Breaking strength and intermediate elongation>

The breaking strength and the intermediate elongation were each measured in accordance with JISL 1017 using an Autograph manufactured by Shimadzu Corporation. Here, the breaking strength and the intermediate elongation of the organic fiber cords before the modification (before the dipping treatment) were 238 N and 11.8%, respectively.

### <Heat shrinkage rate>

The heat shrinkage rate was calculated by dividing the shrinkage rate, which was measured when the modified organic fiber cord to which 50 g of tensile load was applied was placed in an oven at 177°C for 30 minutes, by the initial length of the cord, and then by multiplying the thus obtained value by 100. Here, the heat shrinkage rate of the organic fiber cords before the modification was 7.0%.

### <Adhesion strength>

The modified organic fiber cords were embedded in a rubber and the resultants were vulcanized at a prescribed temperature and pressure. Subsequently, the organic fiber cords were pulled out of the rubber, and the adhesion strength was evaluated based on the pulling force required therefor. The results are indicated as indices, taking the value of the pulling force in Comparative Example 2 as 100. A larger value means a better result.

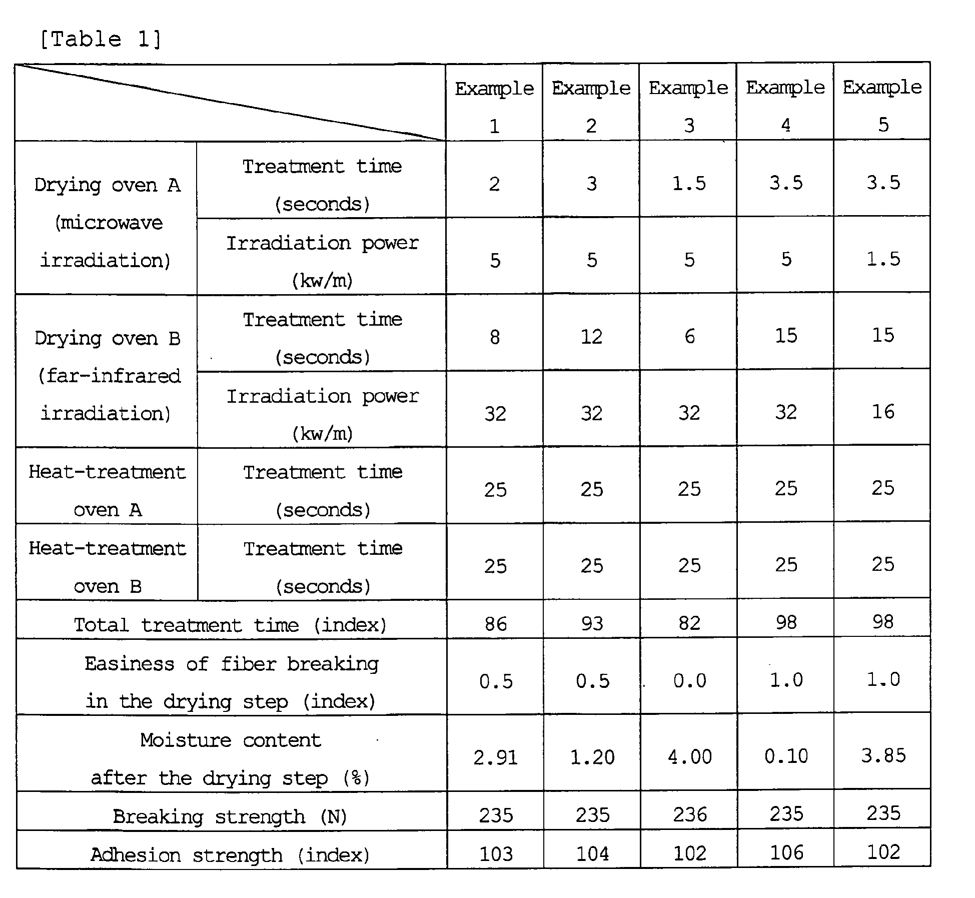

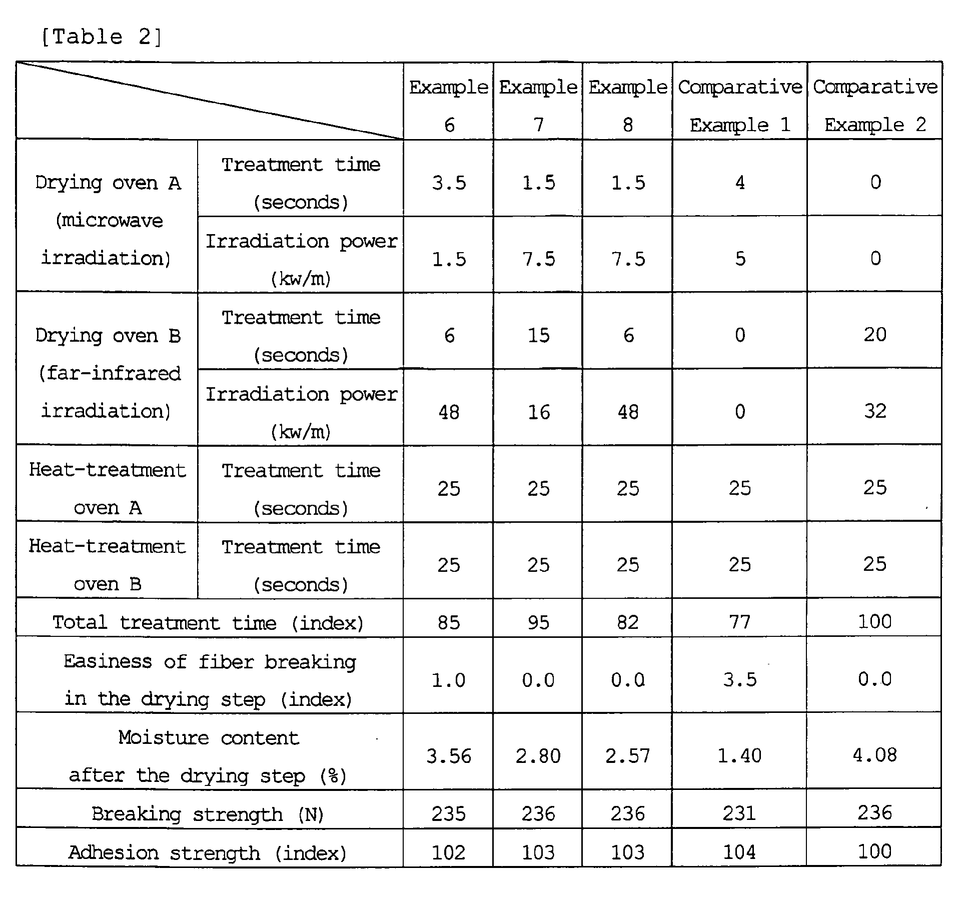

As shown in Tables 1 and 2 in the above, for each of Examples in which the drying step was carried out by a combination of microwave irradiation and far-infrared irradiation on the organic fiber cords, it was confirmed that an appropriate moisture content was efficiently attained while maintaining the physical properties of the cord such as breaking strength, compared to Comparative Examples in which one of microwave irradiation and far-infrared irradiation was performed in the drying step.

## Claims

1. A method for modifying an organic fiber cord, said method comprising the steps of:
dipping an organic fiber cord for tire reinforcement in an adhesive, said organic fiber cord comprising twisted organic fibers;
drying the thus dipped organic fiber cord; and
heat-treating the thus dried organic fiber cord for modification,
wherein, in said drying step, said dipped organic fiber cord is consecutively irradiated with a microwave and a far-infrared radiation.

2. The method for modifying an organic fiber cord according to claim 1, wherein the irradiation time of said microwave is 1.5 to 3.5 seconds.

3. The method for modifying an organic fiber cord according to claim 1, wherein the irradiation time of said far-infrared radiation is 6 to 15 seconds.

4. The method for modifying an organic fiber cord according to claim 2, wherein the irradiation time of said far-infrared radiation is 6 to 15 seconds.

5. The method for modifying an organic fiber cord according to claim 2, wherein the irradiation power of said microwave is 1.5 to 7.5 kW/m.

6. The method for modifying an organic fiber cord according to claim 4, wherein the irradiation power of said microwave is 1.5 to 7.5 kW/m.

7. The method for modifying an organic fiber cord according to claim 3, wherein the irradiation power of said far-infrared radiation is 16 to 48 kW/m.

8. The method for modifying an organic fiber cord according to claim 6, wherein the irradiation power of said far-infrared radiation is 16 to 48 kW/m.

9. The method for modifying an organic fiber cord according to claim 1, wherein the moisture content of said organic fiber cord is 0.1 to 4.0%.

10. The method for modifying an organic fiber cord according to claim 8, wherein the moisture content of said organic fiber cord is 0.1 to 4.0%.

11. The method for modifying an organic fiber cord according to claim 1, wherein 1 to 250 single cords without a weft are simultaneously modified as said organic fiber cord.

12. The method for modifying an organic fiber cord according to claim 10, wherein 1 to 250 single cords without a weft are simultaneously modified as said organic fiber cord.
